# EUROPEAN PATENT APPLICATION

(11) **EP 4 682 747 A1**
(43) Date of publication of application: **21.01.2026**
(21) Application number: 24306209.8
(22) Date of filing: 18.07.2024
(51) Int. Cl.: G06F 21/44, H04L 9/32, H04L 9/40

(54) **METHOD FOR VERIFYING AUTHENTICITY OF A COMMUNICATION BETWEEN A CLIENT SDK AND A TRUSTED ELEMENT**

(71) Applicant: THALES DIS FRANCE SAS, 92190 Meudon (FR)
(72) Inventor: SKRIPAL, Petr, 250 68 HUSINEC - REI (CZ); DETCHEVERRY, Frank, 13600 LA CIOTAT (FR); LACOUTURE, Dominique, 83470 SEILLONS SOURCE D'ARGENS (FR); ADIREDDY, Aswin, 06560 VALBONNE (FR); SEEFELD, Stephan, 5001 AARAU (CH)
(74) Representative: Grevin, Emmanuel

(57) **Abstract**

The invention is a method for verifying authenticity of communication between a client SDK (20) and a trusted element (40). During an initialization phase, the client SDK sends a container (29) including an SDK public signing key (21) to a customer backend (70), via a customer application, a token request (101) comprising the container. The customer backend generates a client authenticity token, CAn, (79) by signing the container with a customer private signing key (71) and sends the CAn to the client SDK via the customer application. During an operating phase, the client SDK generates a command message (202) requesting execution of a function of the trusted element, said command message including the CAn and a command signature generated using an SDK private signing key (22) and sends the command message to the backend service which generates a command request (302) comprising both said CAn and the command signature and sends the command request to the trusted element. The trusted element performs a verification of both the CAn using a customer public signing key (41) and the command signature using the SDK public signing key retrieved from the CAn and executes said function using the command data only if said verification is successful.

## Description

### (Field of the invention)

The present invention relates to methods for verifying authenticity of a communication between a client SDK (Software Development Kit) and a trusted element. It relates particularly to methods for verifying authenticity of the communication between a client SDK hosted in a user's device and a trusted element which is accessible via a backend service.

### (Background of the invention)

In the modern web and mobile based communication with backend servers, the client and server communication is typically secured by authenticity and confidentiality protocols such as for example the direct usage of JSON Web Signature (JWS) whose specifications may be found at https://datatracker.ietf.org/doc/html/rfc7515 or JSON Web Encryption (JWE) whose specifications may be found at https://datatracker.ietf.org/doc/html/rfc7516. JWS and JWE are public protocols. The communication provides signed and/or encrypted end-to-end channel that provides sufficient counter measures against classical "external attacker" threat-model. However, such model fails short when "internal attacker" threat model is taken in account and insider attack paths are considered as a part of overall attack scenario. Usual trusted boundaries of the backend system count with a server-side being trusted inside private zone / network scheme. In such scenarios typically the backend system is connected to additional systems (like a Hardware Security Module) that provide sensitive cryptographical operations and the backend system is considered to be trusted as well.

### (Summary of the Invention)

When an "internal/insider attacker" scenario is taken into account, the model shifts more to "zero-trust" principles which require additional security measures to be applied.

Under such conditions standard end-to-end (E2E) encryption / signature models need to be protected against insider malicious activities that operates with server knowledge of configuration and input / output flows and allow an attacker to perform various attack technique such as spoofing of genuine client's request or calling an unauthenticated or authenticated internal API. Under such conditions, an attacker is furthermore allowed to execute commands on behalf of backend system and send requests to connected systems (like an HSM) and possibly retrieve sensitive material leading to information leak.

There is need to increase security of communication between a client SDK hosted in a customer application and a trusted element hosted in an untrusted environment.

The invention aims at solving the above-mentioned technical problem.

An object of the present invention is a computer-implemented method for verifying authenticity of communication between a client SDK hosted in a device of a user and a trusted element accessible via a backend service. The method comprises an initialization phase and a subsequent operating phase. During the initialization phase:
The client SDK obtains both an SDK public signing key and an SDK private signing key, then sends a container including the SDK public signing key to a customer application installed in the device.

The customer application sends to a customer backend a token request comprising said container.

The customer backend generates a client authenticity token (CAn) by signing the container with a customer private signing key and sends the client authenticity token to the customer application which forwards the client authenticity token to the client SDK.

During the operating phase:
The client SDK generates a command message requesting execution of a function of the trusted element, said command message including the client authenticity token, command data, and a command signature generated using the SDK private signing key and sends said command message to the backend service.

After analysis of the command message, the backend service generates a command request comprising both said client authenticity token, the command signature and command data and sends the command request to the trusted element.

The trusted element performs a verification of both the client authenticity token using a customer public signing key and the command signature using the SDK public signing key retrieved from the client authenticity token and executes said function using the command data only if said verification is successful.

Advantageously, after executing the function, the trusted element may prepare SDK result data and generate a result signature by signing the SDK result data with a trusted element private signing key, then the trusted element may send to the client SDK, via the backend service, a response message comprising both the SDK result data and the result signature. The client SDK may check the authenticity of the SDK result data by verifying the result signature using a trusted element public signing key.

Advantageously, after analysis of the command message, the backend service may retrieve from the customer backend an applicative data and include said applicative data in the command request. The trusted element may execute said function using the applicative data only if said verification is successful.

Advantageously, after executing the function, the trusted element may prepare Customer result data and generates a customer data signature by signing the Customer result data with the trusted element private signing key then the trusted element may send to the customer backend, via the backend service, a response message comprising both the Customer result data and the customer data signature. The customer backend may check the authenticity of the Customer result data by verifying the customer data signature using the trusted element public signing key.

Advantageously, during the operating phase:
the client SDK may include an SDK public ciphering key in a subset of the command message then encrypt said subset using a trusted element public encrypting key,
the trusted element may decrypt the subset of the command message using a trusted element private encrypting key,
the trusted element may generate an encrypted form of the SDK result data using the SDK public ciphering key and may include the encrypted form of the SDK result data in the response message, and
the client SDK may decrypt the encrypted form of the SDK result data using an SDK private ciphering key.

Advantageously, the client authenticity token may contain parameters that restrict usage of the client authenticity token by the trusted element to a specific operation or a limited period.

Advantageously, the function may be any combination of a change of data format, a decryption of an incoming data packet, or an encryption of an outgoing data packet.

Advantageously, the client authenticity token may be built in the form of a token compliant with JavaScript Object Notation, JSON, specifications.

Advantageously, the customer application may get credentials provided by the user and encapsulate the token request in an authentication request comprising said credentials and aiming at authenticating the user by the customer backend.

An object of the present invention is a system for verifying authenticity of communication between a client SDK hosted in a device of a user and a trusted element accessible via a backend service. The system comprises one or more hardware processors and memory operatively coupled to the one or more processors, wherein the memory includes program instructions which when executed by the one or more processors causes the one or more processors to perform the operations of:
during an initialization phase:
   obtaining, by the client SDK, both an SDK public signing key and an SDK private signing key, then sending a container including the SDK public signing key to a customer application installed in the device,
   sending by the customer application to a customer backend a token request comprising said container,
   generating by the customer backend a client authenticity token (CAn) by signing the container with a customer private signing key and sending the client authenticity token to the customer application,
   forwarding, the client authenticity token from the customer application to the client SDK, and
during an operating phase:
   generating by the client SDK a command message requesting execution of a function of the trusted element, said command message including the client authenticity token, command data, and a command signature generated using the SDK private signing key and sending said command message to the backend service,
   after analysis of the command message, generating by the backend service a command request comprising both said client authenticity token, the command signature and command data and sending the command request to the trusted element,
   performing by the trusted element a verification of both the client authenticity token using a customer public signing key and the command signature using the SDK public signing key retrieved from the client authenticity token and executing said function using the command data only if said verification is successful.

Advantageously, after executing the function, the trusted element may be configured to prepare SDK result data and to generate a result signature by signing the SDK result data with a trusted element private signing key, then to send to the client SDK, via the backend service, a response message comprising both the SDK result data and the result signature, and
the client SDK may be configured to check the authenticity of the SDK result data by verifying the result signature using a trusted element public signing key.

Advantageously, after analysis of the command message, the backend service may be configured to retrieve from the customer backend an applicative data and to include said applicative data in the command request, and the trusted element may be configured to execute said function using the applicative data only if said verification is successful.

Advantageously, during the operating phase:
the client SDK may be configured to include an SDK public ciphering key in a subset of the command message then to encrypt said subset using a trusted element public encrypting key,
the trusted element may be configured to decrypt the subset of the command message using a trusted element private encrypting key,
the trusted element may be configured to generate an encrypted form of the SDK result data using the SDK public ciphering key and to include the encrypted form of the SDK result data in the response message, and
the client SDK may be configured to decrypt the encrypted form of the SDK result data using an SDK private ciphering key.

Advantageously, the client authenticity token may contain parameters that restrict usage of the client authenticity token by the trusted element to a specific operation or a limited period.

Advantageously, the customer application may be configured to get credentials provided by the user and to encapsulate the token request in an authentication request comprising said credentials and aiming at authenticating the user by the customer backend.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for verifying authenticity of communication between a client SDK and a trusted element according to an example of the invention,
Fig. 2 shows a second exemplary flow diagram for verifying authenticity of communication between a client SDK and a trusted element according to an example of the invention, and
Fig. 3 shows examples of possible interactions between elements of the system for verifying authenticity of communication between a client SDK and a trusted element according to an example of the invention.

### (Detailed description of the preferred embodiments)

The invention may apply to any type of trusted element. Some embodiments of the invention are well suited for trusted elements which are hardware devices like a Hardware Security Module (HSM), a hardware-based secure enclave, or a physical secure element hosted in computer machine or hardware server. Some embodiments of the invention are well suited for trusted elements which are secure software devices hosted in computer machine or hardware server, like a Trusted Execution Environment (TEE) or an Intel^{®} Software Guard Extensions (SGX).

A trusted element may provide the services or functions of a Key Management System (KMS), a secure storage area, a ciphering/deciphering engine, or an engine capable of changing the format of a data packet for example.

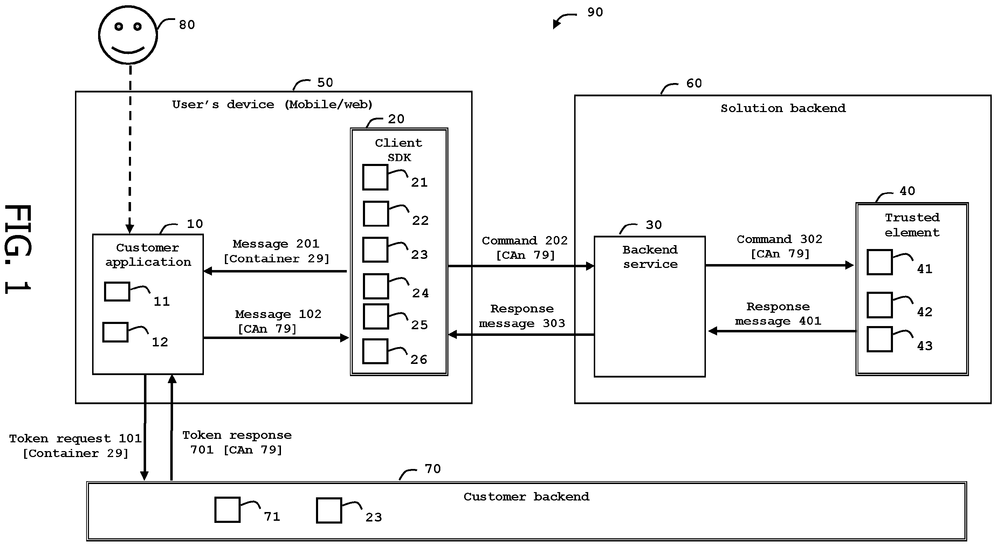

Fig. 1 depicts a first exemplary flow diagram for verifying authenticity of communication between a client SDK and a trusted element according to an example of the invention.

The first exemplary flow diagram relies on a system 90 for verifying authenticity of communication between a client SDK and a trusted element according to an example of the invention.

The solution backend 60 is a system that includes one or more memories storing program instructions and one or more hardware processors configured to execute the program instructions to provide the required functions and services. The solution backend 60 comprises a backend service 30 which acts as an orchestrator in charge of handling incoming and outgoing messages exchanged with entities external to the solution backend 60.

The solution backend 60 comprises a trusted element 40 which is trusted and able to communicate with the backend service 30.

With the exception of the trusted element 40, the solution backend 60 is considered untrusted. In other words, a customer system which uses the solution backend 60 may consider that any part of the solution backend 60 can be subject to an internal attack except the trusted element 40. The customer may be a bank which manages its own customer backend and provide a customer application to its clients for instance.

The trusted element can provide services or functions of a KMS, an HSM, or confidential computing within a secure enclave for instance.

The sensitive functionalities of the solution backend 60 are executed within the trusted element which can be accessed by external entities only through the backend service 30

The client SDK 20 is an entity comprising trusted program code and is expected to be part of the customer application 10.

For the sake of clarity, the customer application 10 and the client SDK 20 are presented as two distinct elements in Fig. 1. However, in practice, the customer application 10 may be built around the client SDK 20 and hosts the client SDK.

The customer application 10 is installed in the device 50 of a user 80 which is supposed to be a client of the customer. The device 50 can be a laptop, a desktop, a tablet PC or a phone for instance. The user may be an individual having a bank account managed by the customer (i.e. by a bank) .

The customer application 10 comprises a communicating unit 11 able to exchange data with a customer backend 70 through conventional communication networks like Telecom networks, the Internet, or any combination of wireless /wired and public/private networks.

The customer application 10 may comprise an authentication unit 12 configured to retrieve authentication data provided by the user 80 (through a user interface of the device 50) and to contribute to the authentication of the user with the help of the customer backend 70.

A conventional customer backend is designed to manage data and provide applicative services specific to the customer's business.

For example, when the customer is a bank (or a financial institution), the customer backend may be configured to manage bank accounts of the clients of the bank (i.e. manage balance, debit operations and credit operations) and/or to manage data assigned to payment instruments linked to the bank accounts.

The customer backend 70 is a system that includes one or more memories storing software instructions and one or more hardware processors configured to execute the software instructions to provide the required functions and services of the customer. The customer backend 70 is considered as being a trusted entity.

It can be noted that, except the client SDK 20, the device 50 of the user may be considered untrusted.

During a preliminary phase, a number of asymmetric key pairs may be deployed over different entities of the system 90. Such deployment can be performed using conventional key management process. For instance, a conventional key ceremony can be used for securely providing the keys. A customer signing key pair may be generated and managed so as to store the customer private signing key 71 in the customer backend 70 and the customer public signing key 41 in the trusted element. A trusted element signing key pair may be generated and managed so as to store the trusted element private signing key 42 in the trusted element and the trusted element public signing key 23 in both the client SDK and the customer backend.

In some embodiments, two separate trusted element signing key pairs can be used: one dedicated to the messages exchanged between the trusted element and the client SDK and the other one dedicated to the messages exchanged between the trusted element and the customer backend 70.

In the example of Fig. 1, the computer-implemented method for verifying authenticity of communication between the client SDK 20 and the trusted element 40 is carried out in two successive phases.

During an initialization phase, the client SDK obtains an SDK signing key pair comprising both an SDK public signing key 21 and an SDK private signing key 22. The client SDK may dynamically generate the key pair or retrieve it from a prepopulated secure repository. Then, the client SDK builds a container 29 including the SDK public signing key 21 and sends it to the customer application 10.

In turn, the customer application prepares a token request 101 that comprises the container 29 and sends the token request 101 to the customer backend 70.

Upon receipt of the token request 101, the customer backend generates a client authenticity token 79 (also called CAn) by signing the container 29 with the customer private signing key 71. After that, the customer backend sends to the customer application 10 a token response 701 comprising the client authenticity token (CAn). In turn, the customer application forwards the client authenticity token to the client SDK 20.

It is to be noted that the customer backend is not authorized to definitively or temporarily cancel the validity of the client authenticity token (CAn) it generated. Moreover, the backend 70 of the customer is entitled to generate client authenticity tokens only for SDK clients integrated in customer applications issued by the same customer.

Once the initialization phase is completed, the method continues with an operating phase during which the client SDK 20 generates a command message 202 that requests execution of a function of the trusted element 40. The command message 202 includes the client authenticity token 79 (CAn), command data, and a command signature generated using the SDK private signing key 22. Then the client SDK 20 sends the command message 202 to the backend service 30.

After analysis of the received command message 202, the backend service 30 identifies that the command message 202 is intended to activate a function of the trusted element and generates a command request 302 comprising both the client authenticity token 79 (CAn), the command signature and said command data. Then the backend service sends the command request 302 to the trusted element 40.

Upon receipt of the command request 302, the trusted element 40 performs a two-part verification: It checks the authenticity of the client authenticity token 79 (CAn) using the customer public signing key 41 and the command signature using the SDK public signing key 21 retrieved from the client authenticity token (CAn). Only if the two-part verification is successful, the trusted element 40 executes the function using the command data.

The function may be explicitly specified in the command messages 202 & 302 or may be implicit. In some embodiments, two or more functions may be specified, and the trusted element may execute these functions.

In some embodiments, the function of the trusted element may be any combination of a change of data format, a decryption of an incoming data packet, an encryption of an outgoing data packet, or the supplying of a sensitive data.

The signatures can be computed and checked using any appropriate known algorithms such as ES256 or RSA2048 for instance.

In some embodiments, the client authenticity token (CAn) may be built in the form of a token compliant for example with JavaScript Object Notation (JSON) specifications, XML (Extensible Markup Language) or YAML (YAML Ain't Markup Language).

In some embodiments, the client authenticity token 79 (CAn) can be signed in the form of JWS with the following content defining headers and a payload:

```
Headers: {
 "alg": "ES256"
 "kid": "123456"
 }
 Payload: {
 "schemeVersion": "1.0"
 "formatType": ["SelfSigned" | "PlatformAttestation"]
 "x509CertificateChain": [<SelfSigned certificate with SDKSigningKey_Pub> |
 <SelfSigned Attestation Data> | <Platform Attestation Data>]
 }
 Signature = "Customer_Sign"
    
```

where:
"alg" stands for "reference of the signing algorithm",
"kid" stands for "identifier of the session keyset",
"I" stands for "or",
"SDKSigningKey_Pub" stands for "SDK public signing key 21", and
"Customer_Sign" stands for "signature of the container computed using the customer private signing key 71".
"alg" and "kid" can be defined according to JSON Web Token (JWT) whose specifications may be found at https://datatracker.ietf.org/doc/html/rfc7519.

In some embodiments, a first operation mode can be implemented in which the client authenticity token 79 (CAn) has a simple SDK public signing key 21 (SDKSigningKey_Pub). The SDK public signing key may be delivered in the form of self-signed certificate and the client authenticity token 79 (CAn) may comprise a x.509 Certificate Chain containing a certificate with is Self-Signed with the SDKSigningKey_Pub.

In some embodiments, a second operation mode can be implemented in which the client authenticity token 79 (CAn) has an SDK public signing key 21 in the form of attestation data that may include both Runtime Application Self-Protection (RASP) and application measurements. The SDK public signing key may be delivered in the form of self-signed certificate and the client authenticity token 79 (CAn) may comprise a x.509 Certificate Chain containing Self-Signed Attestation Data.

In some embodiments, a third operation mode can be implemented in which the client authenticity token 79 (CAn) has an SDK public signing key 21 in the form of attestation data that may include both Runtime Application Self-Protection (RASP) and application measurements. The SDK public signing key may be delivered in the form of hardware-signed certificate attestation and the client authenticity token 79 (CAn) may comprise a x.509 Certificate Chain containing Platform Attestation Data.

In some embodiments, after executing the function, the trusted element 40 may prepare SDK result data reflecting the result of the executed function(s) and generate a result signature by signing the SDK result data with the trusted element private signing key 42. Then the trusted element 40 may send to the client SDK 20, via the backend service 30, a response message comprising both the SDK result data and the result signature. In practice, the trusted element 40 may send to the backend service 30 a response message 401 comprising both the SDK result data and the result signature. In turn, the backend service 30 may prepare and send to the client SDK a response message 303 comprising both the SDK result data and the result signature.

Then the client SDK 20 may check the authenticity of the SDK result data by verifying the result signature using the trusted element public signing key 23.

Preferably, the SDK signing key pair may be a temporary key pair which is valid for a limited period, a single command, or a restricted number of uses.

In some embodiments, during the operating phase, certain data exchanged between the client SDK and the trusted element can be enciphered for confidentiality reasons.

During a preliminary phase, a trusted element encrypting key pair may be generated and managed so as to store the trusted element public encrypting key 24 in the client SDK and the trusted element private encrypting key 43 in the trusted element.

During a preliminary phase or during the initialization phase, an SDK ciphering key pair may be generated and managed so as to store both the SDK public ciphering key 25 and the SDK private ciphering key 26 in the client SDK.

The client SDK may include the SDK public ciphering key 25 in a subset of the payload of the command message 202 (or in the container from which the CAn is generated), then encrypt the subset of the command message 202 using the trusted element public encrypting key 24. Then the SDK client may send the command message 202 to the backend service 30 which, in turn, may send a command message 302 comprising the enciphered subset.

The trusted element may decrypt the received subset using the trusted element private encrypting key 43 and retrieve the relevant data.

When preparing the response message 410, the trusted element may generate an encrypted form of the SDK result data using the SDK public ciphering key 25 and include the encrypted form of the SDK result data in the response message 410. Upon receipt of the response message 410, the backend service 30 may prepare a response message 303 comprising the encrypted form of the SDK result data and send the response message 303 to the client SDK. Then the client SDK may decrypt the encrypted form of the SDK result data using the SDK private ciphering key 26 and get the SDK result data corresponding to the function(s) specified by the initial command message 202.

In some embodiments, the client authenticity token (CAn) may contain parameters that restrict usage of the client authenticity token 79 by the trusted element 40 to a specific operation/function or a limited period.

In some embodiments, upon receipt of the message 201, the customer application 10 may get credentials provided by the user of the device 50 and encapsulate the token request 101 in an authentication request comprising the credentials and aiming at authenticating the user by the customer backend 70. In other words, the customer application 10 may use a conventional authentication request to convey the container 29 and the customer backend 70 may use a conventional authentication response to convey the generated client authenticity token 79 (CAn). Such embodiments allow to smoothly provide the SDK client with a client authenticity token 79 securely generated by the customer backend 70. Thus, no additional action is required from the user compared to use cases where a conventional authentication of the user is required.

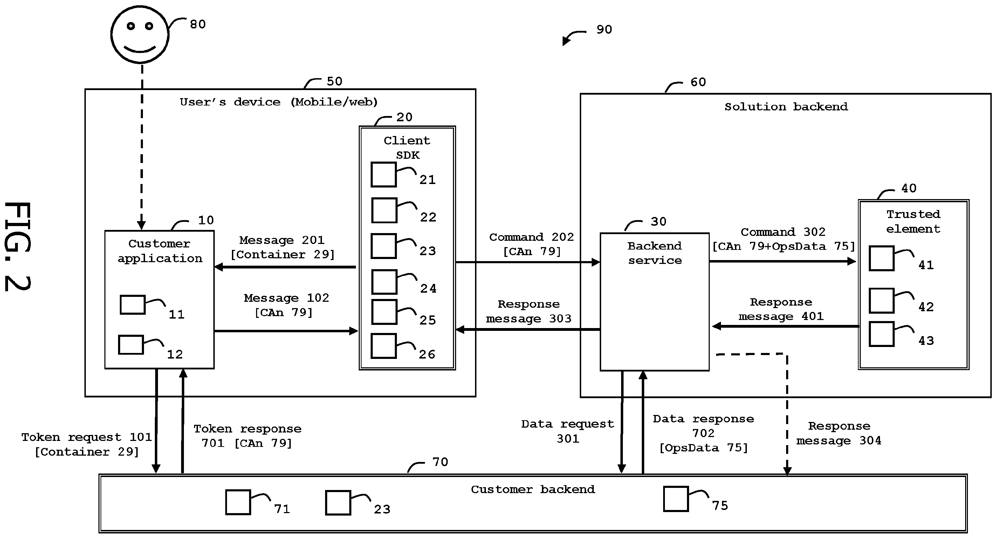

Fig. 2 depicts a second exemplary flow diagram for verifying authenticity of communication between a client SDK and a trusted element according to an example of the invention.

The example of Fig.2 is similar to the one of Fig. 1, with additional data exchanges between the backend service and the customer backend during the communication between the client SDK and the trusted element.

After analysis of the command message 202, the backend service 30 can retrieve from the customer backend 70 an applicative data 75 (which may be called "OpsData") and include the applicative data in the command request 302 which is sent to the trusted element. If the two-part verification is successful, the trusted element may execute the function using the applicative data 75.

In some embodiments, upon analysis of the command message 202, the backend service 30 can send a data request 301 to the customer backend to ask for additional data. In turn, the customer backend 70 may generate or retrieve from a secure repository relevant additional data and send to the backend service 30 a data response 702 comprising the additional data 75.

In some embodiments, the additional data may be enciphered with a keyset shared with the trusted element.

For instance, the additional data may contain a password or a PIN code to be securely provided to the SDK client via the trusted element.

In some embodiments, the trusted element may send a response after execution of the function(s) specified by the command 302. For example, the trusted element may prepare Customer result data and generate a customer data signature by signing the Customer result data with the trusted element private signing key 42. Then the trusted element may include the Customer result data and customer data signature in the response message 401 sent to the backend service 30. In turn, the customer service 30 may detect that a part of the response message 401 is intended to be delivered to the customer backend 70 and prepare and send to the customer backend 70 a response message 304 comprising both the Customer result data and the customer data signature. The customer backend 70 may check the authenticity of the Customer result data by verifying the customer data signature using the trusted element public signing key 23.

For instance, the Customer result data may contain a new value of password, PIN code, Sensitive Authentication Data (PCI DSS - SAD), biometrical data or any sensitive data including highly sensitive personal information to be securely stored on customer backend 70 side.

The flow of Fig. 2 can be executed with or without encrypting exchanged data as described in the embodiments corresponding to Fig. 1.

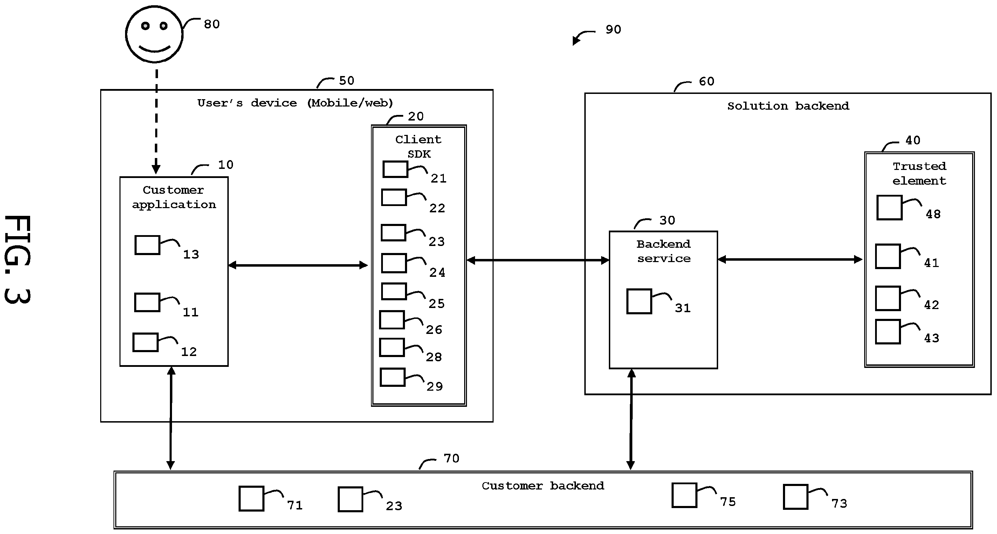

Fig. 3 depicts an example of architecture of a system 90 for verifying authenticity of communication between a client SDK and a trusted element according to an example of the invention.

The system 90 comprises a plurality of hardware processors and memories operatively coupled to the one or more of the processors. The memories include program instructions which when executed by one or more processors causes the one or more processors to perform the operations of the initialization phase and the operating phase according to some embodiments of the inventions.

In the example of Fig. 3, the system 90 comprises a customer application 10 integrating a client SDK 20. The customer application 10 is installed in the device 50 of a user which is client of the customer entity.

The system 90 comprises a customer backend 70 managed by the customer entity.

The system 90 comprises a solution backend 60 that comprises a backend service 30 and a trusted element 40.

The customer application 10 comprises a communicating unit 11 able to exchange data with a customer backend 70 through conventional communication networks like Telecom networks, the Internet, or any combination of wireless /wired and public/private networks.

The customer application 10 comprises an authentication unit 12 configured to retrieve authentication data provided by the user 80 (through a user interface of the device 50) and to contribute to the authentication of the user with the help of the customer backend 70.

The customer application 10 comprises an operating unit 13 designed to request the Client SDK to prepare and send back a container comprising a new SDK public signing key.

The client SDK 20 comprises a key engine 28 designed to obtain an SDK public signing key 21 and an SDK private signing key 22 and to prepare and send a container 29 including the SDK public signing key 21 to a customer application 10 in response to the request of the operating unit 13. The key engine 28 may be configured to generate on the fly a new pair of signing keys assigned to the Client SDK or to retrieve a new pair of signing keys from a secure repository.

The operating unit 13 (of the customer application) is designed to prepare and send to the customer backend 70 a token request 101 comprising the container 29 received from the Client SDK.

The customer backend 70 comprises a token manager 73 configured to create a client authenticity token (CAn) 79 by signing the container 29 with the customer private signing key 71. The token manager 73 is configured to send the created client authenticity token (CAn) to the customer application 10.

The operating unit 13 (of the customer application) is designed to forward the client authenticity token (CAn) to the client SDK 20.

The key engine 28 is designed to temporary store the client authenticity token (CAn) in a secure area.

The client SDK 20 comprises a communication engine 29 designed to manage messages exchanged with the trusted elements.

When the client SDK 20 is asked by the user (via the customer application 10) to request execution of a function of the trusted element 40, the communication engine 29 is configured to generate a command message 202 requesting execution of said function in the trusted element. The command message 202 comprises the client authenticity token (CAn), command data, and a command signature generated by the communication engine 29 using the SDK private signing key 22. The communication engine 29 is configured to send the command message 202 to the backend service 30.

The backend service 30 comprises an orchestrator unit 31 designed to analyze the received command message 202, to detect that data are intended to be forwarded to the trusted element 40, to generate a command request 302 comprising both the client authenticity token (CAn), the command signature and command data and to send the command request 302 to the trusted element 40.

The trusted element 40 comprises a message manager 48 designed to perform a double-part verification of both the client authenticity token (CAn) using the customer public signing key 41 and the command signature using the SDK public signing key 21 retrieved from the client authenticity token (CAn). The message manager 48 is configured to execute the function specified by the command request 302 using the command data only if the double-part verification is successful.

After execution of the function, the message manager 48 is configured to prepare SDK result data and to generate a result signature by signing the SDK result data with a trusted element private signing key 42. Then the message manager 48 is configured to send to the client the backend service 30 a response message 401 comprising both SDK result data and the result signature.

The orchestrator unit 31 (of the backend service 30) is configured to analyze the received response message 401, to detect that data are intended to be forwarded to the client SDK 20, to generate a response message 303 comprising both the SDK result data and the result signature and to send the response message 303 to the client SDK 20.

The communication engine 29 (of the client SDK) is configured to check the authenticity of the SDK result data by verifying the result signature using the trusted element public signing key 23. Then the communication engine 29 may provide the customer application with the SDK result data.

In some embodiments, the orchestrator unit 31 (of the backend service 30) may be configured to detect (by analyzing the received command message 202) that some data are intended to be sent to the customer backend 70. Thus, the orchestrator unit 31 may be configured to generate a data request 301 aiming at retrieving an applicative data (OpsData) 75. Upon receipt of a data response 702 comprising the applicative data 75, the orchestrator unit 31 may be configured to include said applicative data (OpsData) 75 in the command request 302 it sends to the trusted element 40. The message manager 48 (of the trusted element) may be configured to execute the function specified by the command request 302 using the applicative data 75 only if the double-part verification is successful.

In some embodiments, the key engine 28 (of the client SDK) may be configured to generate on the fly a new ephemeral pair of ciphering keys assigned to the Client SDK or to retrieve a new pair of ciphering keys from a secure repository. The communication engine 29 (of the client SDK) may be configured to include the SDK public ciphering key 25 in a subset of the command message 202 and to encrypt this subset using the trusted element public encrypting key 24. Upon receipt of the corresponding command message 302 from the backend service 30, the message manager 48 (of the trusted element) may be configured to decrypt the subset of the received command message 302 using the trusted element private encrypting key 43. The message manager 48 may be configured to generate an encrypted form of the SDK result data using the SDK public ciphering key and to include the encrypted form of the SDK result data in the response message 401 sent to the backend service 30.

Upon receipt of the corresponding response message 303 (sent by the backend service 30, the communication engine 29 (of the client SDK) may be configured to decrypt the encrypted form of the SDK result data using the SDK private ciphering key 26.

In some embodiments, the communication engine 29 (of the client SDK) may be configured to check whether the client authenticity token (CAn) contains one or more parameters that restrict usage of the client authenticity token (CAn) and to apply the limitation(s) specified by the one or more parameters. For instance, the communication engine 29 may restrict usage of the client authenticity token (CAn) to a specific function of the trusted element or discard the current client authenticity token (CAn) after receipt of the response message 303 if one limiting parameter specifies that the (40) the client authenticity token (CAn) is valid for a single operation or transaction with the trusted element.

In some embodiments, the message manager 48 (of the trusted element) may be configured to check whether the client authenticity token (CAn) contains one or more limiting parameters that restrict usage of the client authenticity token (CAn) and to apply the limitation(s) specified by the one or more parameters. For instance, the message manager 48 may deny execution of the function specified by the received command request 302 if the client authenticity token contains a limiting parameter that restricts usage of the CAn to another type of function.

In some embodiments, the operating unit 13 (of the customer application) may be designed to get credentials provided by the user 80 and to encapsulate the token request 101 in an authentication request which aims at authenticating the user by the customer backend 70. Upon receipt of the authentication request, the customer backend 70 may be configured to request its token manager 73 to create a new client authenticity token (CAn) by signing the container (conveyed in the authentication request) with the customer private signing key 71. The customer backend 70 may be configured to send the created client authenticity token (CAn) to the customer application 10 in response to the authentication request.

The invention is not limited to the described embodiments or examples. In particular, the described features of the presented embodiments may be combined as can be understood by those skilled in the art. The client SDK can securely communicate with a plurality of trusted elements. Conversely, a single trusted element can securely communicate with a plurality of client SDK.

The container signed by the customer backend may have a format different from JWS.

When confidentiality is required, any End-to-End Encryption (E2EE) request-response protocol could be used provided that the sending of the SDK public ciphering key to the trusted element is securely performed using some embodiments of the invention.

Thanks to some embodiments of the invention, a communication channel - whose authenticity can be checked - can be established between the client SDK and the trusted element in such a way that any type of internal attack attempts (i.e. originated from an untrusted part of the solution backend) is prevented.

Some embodiments of the invention take advantage of the fact that, in a usual framework, the customer backend is a trusted player which can provide a secure a genuine client authenticity token (CAn).

## Claims

1. A computer-implemented method for verifying authenticity of communication between a client SDK (20) hosted in a device (50) of a user (80) and a trusted element (40) accessible via a backend service (30), wherein the method comprises:
an initialization phase during which:
the client SDK obtains both an SDK public signing key (21) and an SDK private signing key (22), then sends a container (29) including the SDK public signing key (21) to a customer application (10) installed in the device,
the customer application (10) sends to a customer backend (70) a token request (101) comprising said container,
the customer backend (70) generates a client authenticity token (CAn, 79) by signing the container with a customer private signing key (71) and sends the client authenticity token (CAn) to the customer application (10) which forwards the client authenticity token (CAn) to the client SDK (20), and
an operating phase during which:
the client SDK generates a command message (202) requesting execution of a function of the trusted element, said command message including the client authenticity token (CAn), command data, and a command signature generated using the SDK private signing key (22) and sends said command message to the backend service (30),
after analysis of the command message (202), the backend service (30) generates a command request (302) comprising both said client authenticity token (CAn), the command signature and command data and sends the command request (302) to the trusted element (40),
the trusted element (40) performs a verification of both the client authenticity token (CAn) using a customer public signing key (41) and the command signature using the SDK public signing key (21) retrieved from the client authenticity token (CAn) and executes said function using the command data only if said verification is successful.

2. The method according to claim 1, wherein, after executing the function, the trusted element (40) prepares SDK result data and generates a result signature by signing the SDK result data with a trusted element private signing key (42), then sends to the client SDK (20), via the backend service (30), a response message comprising both the SDK result data and the result signature, and
wherein the client SDK (20) checks the authenticity of the SDK result data by verifying the result signature using a trusted element public signing key (23).

3. The method according to claim 1, wherein, after analysis of the command message (202), the backend service (30) retrieves from the customer backend (70) an applicative data (75) and includes said applicative data (75) in the command request (302), and wherein the trusted element (40) executes said function using the applicative data (75) only if said verification is successful.

4. The method according to claim 3, wherein, after executing the function, the trusted element (40) prepares Customer result data and generates a customer data signature by signing the Customer result data with the trusted element private signing key (42) then sends to the customer backend (70), via the backend service (30), a response message comprising both the Customer result data and the customer data signature, and
wherein the customer backend (70) checks the authenticity of the Customer result data by verifying the customer data signature using the trusted element public signing key (23).

5. The method according to claim 2, wherein during the operating phase:
the client SDK includes an SDK public ciphering key (25) in a subset of the command message (202) then encrypts said subset using a trusted element public encrypting key (24),
the trusted element (40) decrypts the subset of the command message (202) using a trusted element private encrypting key (43),
the trusted element (40) generates an encrypted form of the SDK result data using the SDK public ciphering key and includes the encrypted form of the SDK result data in the response message, and
the client SDK decrypts the encrypted form of the SDK result data using an SDK private ciphering key (26).

6. The method according to claim 1, wherein the client authenticity token (CAn) contains parameters that restrict usage of the client authenticity token (CAn) by the trusted element (40) to a specific operation or a limited period.

7. The method according to claim 1, wherein the function is any combination of a change of data format, a decryption of an incoming data packet, or an encryption of an outgoing data packet.

8. The method according to claim 1, wherein the client authenticity token (CAn) is built in the form of a token compliant with JavaScript Object Notation, JSON, specifications.

9. The method according to claim 1, wherein the customer application (10) gets credentials provided by the user and encapsulates the token request (101) in an authentication request comprising said credentials and aiming at authenticating the user by the customer backend (70) .

10. A system (90) for verifying authenticity of communication between a client SDK (20) hosted in a device (50) of a user (80) and a trusted element (40) accessible via a backend service (30), wherein said system comprises one or more hardware processors and memory operatively coupled to the one or more processors, wherein the memory includes program instructions which when executed by the one or more processors causes the one or more processors to perform the operations of:
during an initialization phase:
obtaining, by the client SDK, both an SDK public signing key (21) and an SDK private signing key (22), then sending a container (29) including the SDK public signing key (21) to a customer application (10) installed in the device,
sending by the customer application (10) to a customer backend (70) a token request (101) comprising said container,
generating by the customer backend (70) a client authenticity token (CAn, 79) by signing the container with a customer private signing key (71) and sending the client authenticity token (CAn) to the customer application (10),
forwarding, the client authenticity token (CAn) from the customer application (10) to the client SDK (20), and
during an operating phase:
generating by the client SDK a command message (202) requesting execution of a function of the trusted element, said command message including the client authenticity token (CAn), command data, and a command signature generated using the SDK private signing key (22) and sending said command message (202) to the backend service (30),
after analysis of the command message (202), generating by the backend service a command request (302) comprising both said client authenticity token (CAn), the command signature and command data and sending the command request (302) to the trusted element (40),
performing by the trusted element a verification of both the client authenticity token (CAn) using a customer public signing key (41) and the command signature using the SDK public signing key (21) retrieved from the client authenticity token (CAn) and executing said function using the command data only if said verification is successful.

11. The system according to claim 10, wherein, after executing the function, the trusted element (40) is configured to prepare SDK result data and to generate a result signature by signing the SDK result data with a trusted element private signing key (42), then to send to the client SDK (20), via the backend service (30), a response message comprising both the SDK result data and the result signature, and
wherein the client SDK is configured to check the authenticity of the SDK result data by verifying the result signature using a trusted element public signing key (23).

12. The system according to claim 10, wherein, after analysis of the command message (202), the backend service (30) is configured to retrieve from the customer backend (70) an applicative data (75) and to include said applicative data in the command request (302), and wherein the trusted element (40) is configured to execute said function using the applicative data (75) only if said verification is successful.

13. The system according to claim 11, wherein during the operating phase:
the client SDK is configured to include an SDK public ciphering key (25) in a subset of the command message (202) then to encrypt said subset using a trusted element public encrypting key (24),
the trusted element (40) is configured to decrypt the subset of the command message using a trusted element private encrypting key (43),
the trusted element is configured to generate an encrypted form of the SDK result data using the SDK public ciphering key and to include the encrypted form of the SDK result data in the response message, and
the client SDK is configured to decrypt the encrypted form of the SDK result data using an SDK private ciphering key (26).

14. The system according to claim 10, wherein the client authenticity token (CAn) contains parameters that restrict usage of the client authenticity token (CAn) by the trusted element (40) to a specific operation or a limited period.

15. The system according to claim 10, wherein the customer application (10) is configured to get credentials provided by the user and to encapsulate the token request (101) in an authentication request comprising said credentials and aiming at authenticating the user by the customer backend (70).
